Europäisches Patentamt

European Patent Office

Office européen des brevets

(11) Veröffentlichungsnummer: **0 097 879**
**B1**

(12) **EUROPÄISCHE PATENTSCHRIFT**

(45) Veröffentlichungstag der Patentschrift: 17.10.90

(51) Int. Cl.⁵: **B 23 Q 1/00**, B 23 B 51/04

(21) Anmeldenummer: 83105877.1

(22) Anmeldetag: 15.06.83

(54) Bohrgerät.

(30) Priorität: 29.06.82 DE 3224141
08.07.82 DE 3225519
12.10.82 DE 3237721

(43) Veröffentlichungstag der Anmeldung:
11.01.84 Patentblatt 84/02

(45) Bekanntmachung des Hinweises auf die
Patenterteilung:
17.10.90 Patentblatt 90/42

(84) Benannte Vertragsstaaten:
AT BE CH DE FR GB IT LI NL SE

(56) Entgegenhaltungen:
EP-A- 085 354
BE-A- 656 908
CH-A- 271 450
DE-A-2 845 123
DE-C- 895 881
DE-C- 929 930
FR-A-2 418 706
US-A-2 840 348
US-A-2 963 058
(73) Patentinhaber: Gelsen, Karl-Heinz
Amselstieg 36
D-2080 Pinneberg (DE)

(72) Erfinder: Seefluth, Uwe Christian
Alsterufer 37
D-2000 Hamburg 36 (DE)

(74) Vertreter: Flügel, Otto, Dipl.-Ing. et al
Wissmannstrasse 14, Postfach 81 05 06
D-8000 München 81 (DE)

Courier Press, Leamington Spa, England.

**Beschreibung**

Die Erfindung betrifft ein Bohrgerät für den stationären und den beweglichen Einsatz als Handwerkzeug mit den Merkmalen des Oberbegriffes des Anspruches 1. Es ist bekannt (DE—A—29 10 299), die Ausnehmung eines solchen Bohrwerkzeuges zur Aufnahme von Kernmaterial als Sackbohrung auszubilden. Dies hat den Nachteil, daß der nicht zertrümmerte Bohrkern aus der Ausnehmung des Bohrers entfernt werden muß.

Aus der US—A—2,840,348 ist ein Bohrer bekannt, der unter anderem auch für kernförmig anfallendes Bohrgut geeignet sein soll. Dabei wird eine von einer Zentrumsöffnung der Bohrerkrone schräg zur Bohrerlängsachse verlaufende Ausnehmung vorgesehen, die kurz hinter dem Bohrerkopf die Bohrerschaftseitenwandung durchbricht und in eine um den Bohrerschaft herum verlaufende Spiralnut mündet, deren Querschnittsfläche nur einen Bruchteil derjenigen der Ausnehmung ausmacht. Aufgrund des Schrägverlaufes der Ausnehmung unmittelbar ausgehend von der Bohrerkrone wird das Bohrgut sogleich gebrochen bzw. abgeschert und derart zerteilt, daß Teile mit dem Öffnungsdurchmesser der Bohrkrone praktisch nicht nach außen gelangen; nur so ist auch deren beabsichtigter Transport durch die Spiralnut möglich.

Die DE—C—895 881 zeigt ein Bohrgerät, bei welchem ein rohrförmiger Bohrer an eine Tragwelle für ein Absauggerät angeschlossen ist, wobei die Tragwelle eine an die rohrförmige Ausnehmung des Bohrers anschließende Aussparung aufweist, die gekrümmt aus der Bohrerlängsachse heraus verläuft und wellenaußenseitig in einen Aufnahmeraum mündet, der mit einer nach außen führenden Öffnung versehen ist durch welche Vakuum aufgebracht wird. Dieses Bohrgerät ist für das Ausaugen von Bohrstaub gedacht und insoweit auch nicht anders verwertbar, als kernförmiges, durch die Ausnehmung des Bohrers anfallendes Gut nicht ohne weitgeführte Verkleinerung durch den Bogenverlauf der Aussparung in den Aufnahmeraum gelangen kann. Die Mündung der Aussparung in den Aufnahmeraum ist nämlich so klein bemessen, daß sie in ihrer axialen Erstreckung die in Längsachsrichtung gesehene Projektion des gegenüberliegenden gekrümmten Wandungsverlaufes nicht abdeckt. Das bedeutet, daß keine in Längsausrichtung sich erstreckende Kernstücke durch den Anlauf an die gebogene Wandung aus der Aussparung heraus in den Aufnahmeraum gelangen können, der darüber hinaus hinsichtlich seiner radialen Ringabmessung so klein bemessen ist, daß solche abgebrochenen Bohrkernstücke ohne weitergehende Zertrümmerung zu Verklemmungen führen würden.

Es ist Aufgabe der Erfindung, ein Bohrgerät der letztgenannten Art zu schaffen, bei welchem eine Zerkleinerung des Bohrkerns zumindest weitgehend vermiedbar ist, das nicht leicht verstopft und das eine Abführung des Bohrkernmaterials bzw. des Bohrkleingutes durch Absaugen zugänglich ist.

Diese Aufgabe wird erfindungsgemäß durch ein Bohrgerät mit den Merkmalen des Anspruches 1 gelöst.

Mit dem erfindungsgemäßen Bohrgerät wird sichergestellt, daß das in die Ausnehmung des Schaftes aufgenommene Bohrkernmaterial kontinuierlich die Ausnehmung durchwandern und an einer vom Bohrkopf abgewandten Stelle innerhalb des Gehäuses der Bohrmaschine austreten kann. Durch die Anordnung und Bemessung der schräg oder gebogen verlaufenden Auslenkwandung, an der der Kern in verhältnismäßig langen Abschnitten abgebrochen wird, und des dieser Wandung über ihrer gesamte axiale Länge hinweg zugeordneten Auswurfskanals wird sichergestellt, daß Verstopfungs- und Verklemmungsgefahren vermieden sind, ohne daß das kernförmige Bohrgut fein zertrümmert werden muß. Damit wird der Kraftbedarf des Bohrvorganges herabgesetzt und dessen Vorschubgeschwindigkeit begünstigt. Neben der Abführung des grob gebrochenen kernförmigen Bohrgutes kann zusätzlich durch Absaugen Bohrklein bzw. Bohrstaub mit abgeführt werden.

Grundsätzlich kann sich die an die Ausnehmung des Bohrers anschließende Aussparung ebenfalls im Bohrerschaft befinden, der zu diesem Zwecke entsprechend weit in das Gehäuse der Bohrmaschine hineingeführt ausgebildet werden muß. In besonders bevorzugter Ausführung wird jedoch die Aussparung in einem Schaftbereich, insbesondere einem Wellenschaft einer Antriebs- und/oder einer Schlagwelle, ausgebildet. Ein besonderer Vorteil der Einbeziehung der Bohrmaschine in die Bohrkernabführung besteht darin, daß praktisch alle Kernbohrertypen mit axial durchgehender Ausnehmung zur Anwendung gelangen können.

In weiterhin bevorzugter Ausführung ist die Öffnung für das Abführen des Bohrgutes an einen Auffangbehälter angeschlossen, der ortsfest bzw. maschinenfest angeordnet ist.

Die Abführung des Bohrgutes, neben dem Bohrkern material auch Bohrklein und Bohrstaub, kann durch eine Saugeinrichtung erleichtert werden, die mit einem Saugkorb an die Abführröffnung der Bohrmaschine anzuschließen ist. Ein solcher Saugkorb kann den vorerwähnten Aufnahmebehälter ersetzen oder durch diesen gebildet sein.

Der Übergang zwischen der Ausnehmung und der Austrittsöffnung als schräg oder bogenförmig zur Bohrerlängsachse verlaufende Wandung ist in bevorzugter Ausführung durch einen Schlitz in der Schaftwandung gebildet, der durch eine Segmentfräsung einfach herstellbar ist. Durch diese schlitzartige, sich zur Austrittsmündung hin erweiternde Ausbildung des Überganges hat das Bohrkernmaterial die Möglichkeit, auch bei Anfall unregelmäßiger Bruchstücke ohne festzuklemmen ausgeworfen zu werden.

Bei einer Ausführung als konventioneller Wendel-Stein-Bohrer mit zwei Hauptschneiden ergibt sich der Vorteil, den Bohrfortschritt wesentlich zu erhöhen, da man das nicht zertrümmerte Kernstück in der Dicke zum Beispiel auf den Durchmesser der Querschneide der Bohrerspitze beschränken kann. Das Kernstück bzw. die Ausnehmung im Bohrerschaft könnte—je nach Anwendungszweck—zum Beispiel bei Kronenbohrern biz zu ca. 80% des Bohrerdurchmessers ausmachen, so daß vom zu bohrenden Material nur noch eine kleiner Teil zertrümmert werden muß.

In weiterhin bevorzugter Ausführung der Erfindung kann man das Absaugen auf einen sich insbesondere im Umfangsbereich des Bohrkernmaterials lösenden Bohrstaubanteil beschränken, in dem man im Bereich eines entsprechend an dem Bohrerschaft oder dem Schaftbereich im Inneren einer Antriebsmaschine anzubringenden Saugkorb Saugschlitze in der Schaftwandung anbringt, durch welche dieser feinere Bohrkernanteil abgesogen wird.

Weitere Ausführungen der Erfindungen ergeben sich aus Unteransprüchen in Verbindung mit den in der Zeichnung wiedergegebenen Ausführungsbeispielen, auf die besonders Bezug genommen wird und deren nachfolgende Beschreibung die Erfindung näher erläutert.

Es zeigen:

Figur 1 einen schematischen Teillängsschnitt durch eine weitere elektrische Handbohrmaschine mit eingepsanntem Hohlbohrer und seitlichem Bohrkernauswurf;

Figur 2 einen Querschnitt durch den Austrittsmündungsbereich nach der Linie A—B in Figur 2;

Figur 3 die Bohrerspitze eines Bohrwerkzeugs in vergrößerter Darstellung;

Figur 4 eine Draufsicht auf eine andere Bohrerspirtze;

Figur 5 einen teilweise dargestellten Bohrer als Bohrwerkzeug zum Hohl- oder Kernbohren mit auf dessen Spitze aufgesetzter Anbohrvorrichtung, ebenfalls in schematisiertem Längsschnitt.

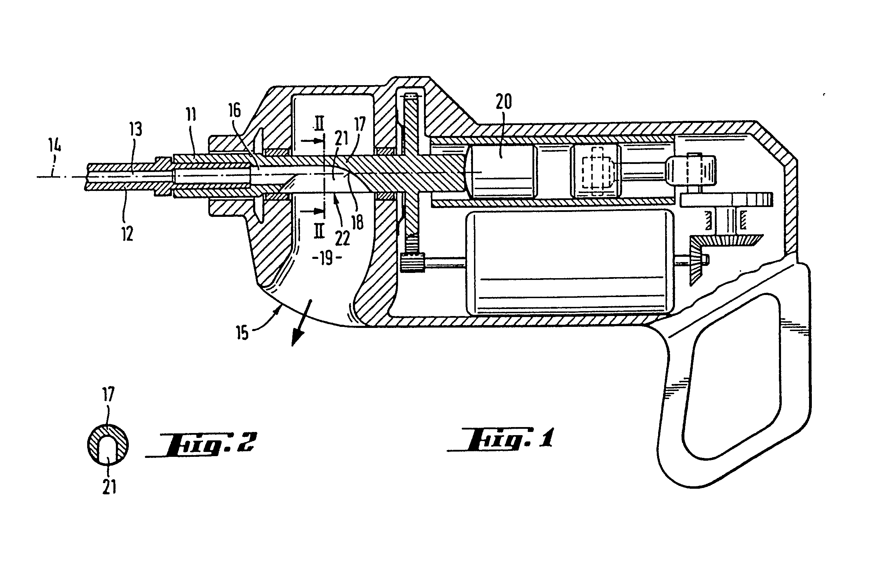

In Figur 1 ist in der Bohreraufnahme (Futter) 11 der Bohrerschaft 12 eines hier nur teilweise wiedergegebenen Hohlbohrers befestigt. Die als zentraler Hohlkanal ausgebildete Ausnehmung 13 des Bohrerschaftes 12 durchläuft den gesamten Bohrer und wird in der Bohrmaschine innerhalb eines Schaftbereiches 17, der hier als Antriebs- bzw. Schlagwelle ausgebildet ist, zentral um die Längsachse 14 verlaufend weitergeführt. Der die gesamte Ausnehmungs 13 umfassende Schaft besteht somit aus dem Bohrerschaft 12 und dem Schaftbereich 17 Der im Bohrer anfallende Bohrkern schiebt sich während des Bohrvorganges somit durch die als Hohlkanal ausgebildete Ausnehmung 16 im Schaftbereich 17.

Der Schlaghammer 20 ist konventionell in der verlängersten Achslinie 14 des Hohlbohrers 12 angeordnet. Die als Hohlkanal ausgebildete Ausnehmung 13 des in dem Bohrfutter 11 befestigten Hohlbohrerschaftes 12 läuft in die Schlag- und Antriebswelle hinein, die den im Inneren der Maschine liegenden Schaftbereich 17 bildet, und wird—vorzugsweise dicht hinter dem Bohrfutter 11—als Ausnehmung 16 mit etwas größerem Durchmesser aus dem rotierenden Schaftbereich 17 seitlich herausgeführt. Die Auslenkung 18 des Hohlkanals 16 ist dabei in vorteilhafter Weise so flach bemessen, daß der verbleibende Bohrkern durch den Vorschub während des Bohrens automatisch bricht und in den Hohlraum 19 gelangt, der den rotierenden Auswurfkanal 21 mit Austrittsmündung 22 umgibt. Auf diese Weise gelangt das Bohrkernmaterial durch die Öffnung 15 am Bohrmaschinengehäuse ins Freie oder wird durch einen nicht dargestellten dort angebrachten Behälter aufgefangen.

Um eine einfache und konstensparende Fertigung des Auswurfkanals 21 mit der Austrittsmündung 22 sicherzustellen, kann diese in seiner Formgebung in seitlicher Projektion als kreissegmentförmige Fräsung ausgeführt werden.

Figur 2 zeigt den Querschnitt II—II des Auswurfkanals 21 der Welle 17 in einer möglichen Ausführungsform.

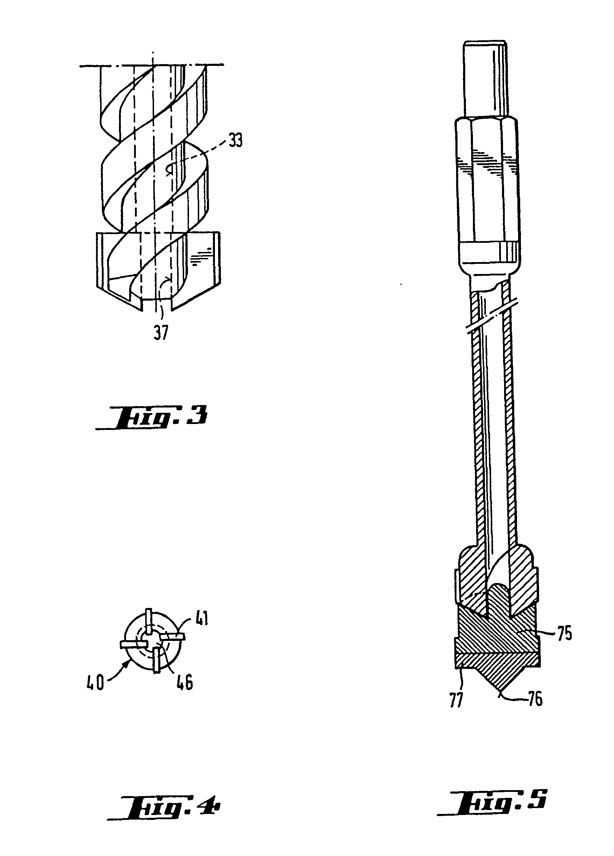

In Fig. 3 ist dargestellt, wie die längslaufende Ausnehmung 33 und der Bohrerspitze—vorzugsweise als stufenförmige Verengung 37—einen verkleinerten Durchmesser aufweist. Auf diese Weise wird erreicht, daß der verbleibende Bohrkern innerhalb der Ausnehmung nicht festklemmt. Dazu kann auch im Verlauf der Längsausdehnung der Ausnehmung durch den Bohrer eine weitere Stufe im Sinne einer Erweiterung vorgesehen werden oder die Ausnehmung erweitert sich von der Spitze an schaftaufwärts allmählich.

Fig. 4 zeigt den Bohrkopf in der Ausführung einer Bohrkrone 40 mit eingelöteten Hartmetallschneiden 41. Der Bohrkopf kann jedoch auch bei dieser Bohrerart mit nur zwei Hauptschneiden an der Bohrspitze versehen sein.

Das erfindungsgemäße Bohrkernauswurf-Prinzip kann ebenfalls beim Metallbohren angewendet werden. In einem solchen Falle ist es vorteilhaft, die Ausnehmung bzw. den Durchmesser des im Bohrer längslaufenden Hohlkanals nicht größer als die durch die Querschneide des Bohrers abgedeckte Bohrfläche auszuführen. Auf diese Weise können Wendelbohrer mit zwei Hauptschneiden zum Bohren von Metallen herangezogen werden, bei denen der schlechte Wirkungsgrad der Querschneide entfällt und der Bohrkern seitlich—durch Ausbiegung—aus dem Schaft herausgeführt wird. Auch bei Metallbohrern mit mehr als zwei Hauptschneiden oder bei Metall-Kronenbohrern kann dieses Bohrprinzip Anwendung finden.

Fig. 5 zeigt die teilweise Darstellung eines Hohl- oder Kernbohrers, auf dessen Spitze (Bohrkopf) eine aufsetzbare, vorzugsweise mittels Schnappfeder lösbar befestigte Anbohrvorrichtung 75 angebracht ist. Diese Anbohrvorrichtung 75 weist bei dieser Ausführung eine zuerst ansetzende zentrale Spitze 76 auf une weiterhin Hauptschneiden 77, die erste bei einem geringen Bohrfortschritt zum Bohransatz gelangen und den Durchmesser des Bohrkopfes des Bohrers aufweisen, auf dem die Anbohrvorrichtung befestigt ist. Auf diese Weise wird erreicht, daß man einen Hohlbohrer gezielt ansetzen kann, ohne daß der Bohrer aus dem Bohrbereich herausläuft. Nach dem Anbohren einiger weniger Millimeter wird die Anbohrvorrichtung 75 vom Bohrer entfernt, der dann in der geschaffenen Vertiefung ohne auszubrechen angesetzt werden kann.

**Patentansprüche**

1. Bohrgerät für den stationären und den beweglichen Einsatz als Handwerkzeug für Bohrungen in Beton, Stein oder dergleichen Materialien und/oder Metallen verschiedener Art, das eine Bohrmaschine und einen in diese eingesetzten, einen Bohrkopf tragenden Bohrer umfasst, der eine durch den Bohrerschaft (12) konzentrisch zur Bohrerlängsachse verlaufende Ausnehmung (13) zur Aufnahme von Bohrgut aufweist, die sich in einer zur Bohrmaschine hin hinter dem Bohrfutter und diesem benachbart gelegenen, gleichweit oder weiter bemessenen Aussparung (16) fortsetzt, welche eine zur Bohrerlängsachse schräg oder gebogen verlaufende Auslenkwandung (18) aufweist, die in einem die Aussparung (16) seitlich öffnenden, der Umlenkwandung (18) gegenüberliegenden Auswurfkanal (21) aufläuft, der in einem ringförmigen Hohlraum (19) mündet (22), welcher eine nach außen führende Öffnung (15) für die Abführung des Bohrgutes aufweist, dadurch gekennzeichnet, daß die Ausnehmung (13) des Bohrers zur Erbohrung kernförmigen, an der Auslenkwandung (18) grob zu brechenden Bohrgutes durch dessen Bohrkopf hindurchgeführt ausgebildet ist, daß die die Ausnehmung (13) fortsetzende, die Auslenkwandung (18) aufweisende Aussparung (16) sich derart bis ins Innere der Bohrmaschine erstreckt, daß die Austrittsmündung (22) des Auswurfkanals (21), der diese ringförmig umgebende Hohlraum (19) und die nach außen führende Öffnung (15) innerhalb der Bohrmaschinengehäuses ausgebildet sind, daß die Auslenkwandung (18) in radialer Richtung gesehen auf die axiale Erstreckung des Auswurfkanales (21) beschränkt ist und daß der Hohlraum (19) an die Größe der durch Anlauf des Bohrkerns an der Auslenkwandung (18) entstehenden bzw. abgelenkten Bruchstücke des Bohrkerns angepasst ausgebildet ist.

2. Bohrgerät nach Anspruch 1, dadurch gekennzeichnet, daß die Aussparung (16) in einem an den Bohrerschaft (12) anschließenden Schaftbereich der Bohrmaschine, insbesondere Wellenschaft einer Antriebs- und/oder Schlagwelle, ausgebildet ist.

3. Bohrgerät nach Anspruch 1 oder 2, dadurch gekennzeichnet, daß der Auswurfkanal (21) mit der Auslenkwandung (18) als Schlitz in der Schaftwandung mit sich nach außen verbreitender Öffnung ausgeführt ist, der insbesondere durch eine von der Außenseite her in den Schaft sich vertiefende—vorzugsweise in seitlicher Ansicht kreissegmentförmige—Fräsung gebildet ist.

4. Bohrgerät nach einem der Ansprüche 1 bis 3, dadurch gekennzeichnet, daß die Ausnehmung (13) zum Bohrkopf hin einen—vorzugsweise als stufenförmige Verengung (37) ausgebildeten—verkleinerten Durchmesser aufweist.

5. Bohrgerät nach einem der Ansprüche 1 bis 4, dadurch gekennzeichnet, daß die Ausnehmung sich von der Bohrerspitze aufwärts in mehreren Stufen oder kontinuierlich geringfügig erweiternd ausgebildet ist.

6. Bohrgerät nach einem der Ansprüche 1 bis 5, dadurch gekennzeichnet, daß an die Abführöffnung (15) ein Behälter für das erbohrte Kerngut angeschlossen ist.

7. Bohrgerät nach einem der Ansprüche 1 bis 6, dadurch gekennzeichnet, daß an die Abführöffnung (15) eine Absaugeinrichtung angeschlossen ist.

8. Bohrgerät nach einem der Ansprüche 1 bis 7, dadurch gekennzeichnet, daß der außenseitig glatt ausgebildete Bohrerschaft eine auf ihn aufgesteckte, befestigte Wendel sowie einen an ihm befestigten Bohrkopf (40) bzw. an ihm befestigte Hartmetallschneiden (41) aufweist.

9. Bohrgerät nach Anspruch 7 oder 8, dadurch gekennzeichnet, daß der Bohrerschaft aus einem—vorzugsweise dünnwandigen—Rohr besteht, an welchem der Bohrkopf und die Bohrereinspannausbildung formschlüssig—insbesondere durch Einlöten oder Schweißen—befestigt sind, während der Bohrerschaft-Innendurchmesser und der Bohrerschaft-Außendurchmesser so bemessen sind, daß zwischen der Außenwandung und der Bohrlochwandung ein längslaufender Hohlraum für die Zuluft und zwischen der Innenwandung und dem Bohrkern ein längslaufender Hohlraum für die Saugluft einer Bohrkleinabsaugung ausgebildet ist.

**Revendications**

1. Appareil de perçage pour utilisation stationnaire et mobile, en tant qu'outil manuel pour réaliser des perçages dans le béton, la pierre ou matériaux analogues et ou métaux de différents types, qui comprend une machine à percer et un foret inséré dans celle-ci et portant une tête de perçage, foret qui présente un évidement (13), qui s'étend dans la tige de foret (12), concentriquement à l'axe longitudinal du foret, en vue de recevoir le produit résultant du perçage qui progresse par une cavité (16), placée, par rapport à la machine à percer, derrière le mandrin de perçage et au voisinage de celui-ci, qui est d'une dimension de passage identique ou plus large, la cavité (16) présentant une paroi de déviation (18) s'étendant en biais ou de manière coudée par rapport à l'axe longitudinal du foret, paroi qui débouche dans un canal d'éjection (21) créant une ouverture qui est située latéralement à la cavité (16), en face de la paroi de déviation (18), canal débouchant en un espace creux (22) de forme annulaire, qui présente une ouverture (15) conduisant à l'extérieur, pour l'évacuation du produit provenant du perçage, caractérisé en ce que, vis à vis du perçage, l'évidement (13) du foret est réalisé en forme de carotte, le produit provenant du perçage grossier passant sur la paroi de déviation (18), en traversant sa tête de perçage, en ce que la cavité (16) qui prolonge l'évidement (13) et qui comporte la paroi de déviation (18), s'étend jusqu'à l'intérieur de la machine à percer de façon que l'embouchure de sortie (22) du canal d'éjection (21), l'espace creux (19) qui l'entoure suivant une forme annulaire, et l'ouverture (15) conduisant vers l'extérieur, soient réalisés à l'intérieur du carter de la machine à percer, en ce que la paroi de déviation (18), vue en direction radiale, est limitée à l'étendue axiale du canal d'éjection (21) et en ce que l'espace creux (19) est réalisé de façon adaptée à la taille de la pièce de rupture de la carotte de perçage qui résulte ou qui dérive de la montée de la carotte de perçage contre la paroi de déviation (18).

2. Appareil de perçage selon la revendication 1, caractérisé en ce que la cavité (16) est réalisée dans une zone de tige de la machine à percer se raccordant à la tige de foret (12), en particulier tige d'arbre d'un arbre d'entraînement et/ou de percussion.

3. Appareil de perçage selon la revendication 1 ou 2, caractérisé en ce que le canal d'éjection (21) est réalisé avec la paroi de déviation (18) constituant une fente dans la paroi de tige, avec une ouverture s'agrandissant vers l'extérieur, canal formé en particulier par un fraisage s'enfonçant dans la tige, en partant de la face extérieure, ayant de préférence une forme de segment de cercle en vue de côté.

4. Appareil de perçage selon l'une des revendications 1 à 3, caractérisé en ce que l'évidement (13) présente, allant vers la tête de perçage, un diamètre allant en diminuant, réalisé de préférence sous forme de rétrécissement à gradins (37).

5. Appareil de perçage selon l'une des revendications 1 à 4, caractérisé en ce que l'évidement est réalisé en s'agrandissant légèrement, en plusieurs gradins ou de manière continue, en partant de la pointe du foret.

6. Appareil de perçage selon l'une des revendications 1 à 5, caractérisé en ce qu'un réservoir destiné au produit provenant du perçage est raccordé à l'ouverture d'évacuation (15).

7. Appareil de perçage selon l'une des revendications 1 à 6, caractérisé en ce qu'un dispositif d'aspiration est raccordé à l'ouverture d'évacuation (15).

8. Appareil de perçage selon l'une des revendications 1 à 7, caractérisé en ce que la tige de foret, qui est réalisée lisse sur la face extérieure, présente une hélice enfichée et fixée sur lui, ainsi qu'une tête de perçage (40) fixée sur lui ou des tranchants en métal dur (41) fixés sur lui.

9. Appareil de perçage selon la revendication 7 ou 8, caractérisé en ce que la tige de foret se compose d'un tube, ayant de préférence des parois minces, sur lequel la tête de perçage et le système de serrage du foret sont fixés, par ajustement de forme, en particulier par brasage ou soudage, alors que le diamètre intérieur de la tige de foret et le diamètre extérieur de la tige de foret sont dimensionnés de telle façon qu'entre la paroi extérieur et la paroi du trou de perçage, il est réalisé un espace creux longitudinal, pour l'amenée d'air, et qu'entre la paroi intérieur et la carrotte de perçage, il est réalisé un espace creux longitudinal, pour l'air d'aspiration d'une petite aspiration de perçage.

**Claims**

1. Drilling apparatus for stationary and moveable use as a hand tool for drilling in concrete, rock or similar materials and/or metals of various kinds, comprising a drilling machine and inserted therein a bit having a drilling head, the bit having a recess (13) extending through the bit shaft (12) concentrically with respect to the longitudinal axis of the bit in order to receive any drilled-out material, said recess being continued as a cavity (16) located towards the drilling machine, behind the drill chuck and adjacent thereto, of similar or larger dimensions, said cavity having a deflecting wall (18) which extends diagonally or in a curve with respect to the longitudinal axis of the bit, this deflecting wall merging into an ejector channel (21) which opens out the cavity (16) laterally and is opposite the deflecting wall (18), said ejector channel opening (22) into an annular cavity (19) which has an outwardly directed opening (15) for removing the drilled-out material, characterised in that the recess (13) in the bit for drilling is formed through the drilling head to have passed therethrough granular drilled-out material which is to be coarsely broken away at the deflecting wall (18), in that the cavity (16) which forms the continuation of the recess (13) and which contains the deflecting wall (18) extends into the interior of the drilling machine so that the exit port (22) of the ejector channel (21), the cavity (19) surrounding said port in an annular configuration and the opening (15) leading outwards are formed within the housing of the drilling machine, in that the deflecting wall (18), viewed in the radial direction, is restricted to the axial extent of the ejector channel (21) and in that the cavity (19) is adapted to fit the size of the fragments of drilling core which are formed by the contact of the drilling core with the deflecting wall (18) or those fragments which are deflected away.

2. Drilling apparatus according to claim 1, characterised in that the cavity (16) is formed in a shaft region of the drilling machine adjacent to the bit shaft (12), more particularly the spindle shaft of a drive and/or hammer shaft.

3. Drilling apparatus according to claim 1 or 2, characterised in that the ejector channel (21) is constructed with the deflector wall (18) as a slot in the shaft wall with an outwardly widening opening, this channel being formed more particularly by milling from the outside into the shaft, preferably in the form of a segment of a circle, viewed laterally.

4. Drilling apparatus according to any of claims 1 to 3, characterised in that the recess (13) has a smaller diameter towards the drilling head preferably in the form of a stepped constriction (37).

5. Drilling apparatus according to any of claims 1 to 4, characterised in that the recess widens out slightly from the tip of the bit in the upward direction, in several steps or continuously.

6. Drilling apparatus according to any of claims 1 to 5, characterised in that a container for the core material drilled out is connected to the discharge opening (15).

7. Drilling apparatus according to any of claims 1 to 6, characterised in that a suction device is connected to the discharge opening (15).

8. Drilling apparatus according to any of claims 1 to 7, characterised in that the bit shaft, which is smooth on the outside, has a coil fitted thereon and fixed in position and a drilling head (40) secured thereto or hard metal cutters (41) secured thereto.

9. Drilling apparatus according to claim 7 or 8, characterised in that the bit shaft consists of a preferably thin walled tube on which the drilling head and the bit chuck assembly are interlockingly secured, more particularly by soldering or welding, whilst the inner and outer diameters of the bit shaft are such that a longitudinal extending cavity is formed between the outer wall and the wall of the drilled hole for the supply of air and a longitudinal extending cavity is formed between the inner wall and the drill core for the sucked in air of a small drill suction device.

EP 0 097 879 B1

*Fig. 1*

*Fig. 2*

1

*Fig. 3*

*Fig. 4*

*Fig. 5*